# EUROPÄISCHE PATENTANMELDUNG

(11) **EP 0 779 458 A2**
(43) Veröffentlichungstag der Anmeldung: **18.06.1997**
(21) Anmeldenummer: 96119017.0
(22) Anmeldetag: 27.11.1996
(51) Int. Cl.: F16K 31/06

(54) **ELektrisch ansteuerbares Magnetventil**

(30) Priorität: 12.12.1995 DE 19546384
(71) Anmelder: Bosch-Siemens Hausgeräte GmbH, 81669 München (DE)
(72) Erfinder: Kordon, Rolf, 89537 Giengen (DE); Sauss, Georg, Dipl.-Ing. (FH), 89537 Giengen (DE)

(57) **Zusammenfassung**

Bei einem elektrisch ansteuerbaren Magnetventil zum Steuern eines Strömungsmediums mit einem länglich ausgebildeten Ventilkörper zur Aufnahme eines darin weitestgehend geführt bewegbaren Ventilstellgliedes, welches einen Strömungsweg zwischen einer Einlaß- und einer Auslaßöffnung am Ventilkörper freigibt, ist der Ventilkörper wenigstens an einer seiner beiden Stirnseiten mit einer durch spanlose Formgebung erzeugten trichterähnlich ausgebildeten Verjüngung versehen, deren trichterauslaufseitiges Ende einen auf den Außendurchmesser von anzuschließenden Rohrleitungen weitestgehend abgestimmten Öffnungsquerschnitt aufweist.

## Beschreibung

Die Erfindung betrifft ein elektrisch ansteuerbares Magnetventil zum Steuern eines Strömungsmediums mit einem länglich ausgebildeten Ventilkörper zur Aufnahme eines darin Weitestgehend geführt bewegbaren Ventilstellgliedes, welches einen Strömungsweg zwischen einer Einlaß- und einer Auslaßöffnung am Ventilkörper freigibt.

Aus der DE-PS 27 23 365 ist ein in einem Mehrtemperaturen-Kühlgerät eingesetztes 3-Wege-Magnetventil bekannt, dessen Ventilgehäuse aus einem bolzenartigen Rohling gefertigt ist, welcher zur Anbringung des Elektromagneten oder zur Herstellung der Führungsbohrung für den Ventilstößel oder der Einlaß- bzw. Auslaßöffnungen unterschiedlichem spanabhebendem Bearbeitungsverfahren unterzogen wurde, wodurch die Herstellkosten des Magnetventils, bedingt durch die Herstellzeit des Ventilgehäuses, ungünstig beeinflußt wurden.

Demgegenüber ist man in der Automobil-Industrie bei Antiblockiersystemen zum Einsatz kommenden Magnetventilen zum Zwecke der Kostensenkung dazu übergegangen, die Ventilgehäuse aus einem dünnwandigen, plastisch verformbaren Rohr herzustellen, welche mit spanabhebend bearbeiteten Ventilsitzen und Anschlußstutzen für anzuschließende Rohrleitungen kombiniert sind.

Aufbauend auf diesem Stand der Technik ist es Aufgabe der Erfindung, die Fertigbarkeit von Magnetventilen gemäß dem Oberbegriff des Anspruches 1 weiter zu vereinfachen und zu verbessern.

Diese Aufgabe wird gemäß der Erfindung dadurch gelöst, daß der Ventilkörper wenigstens an einer seiner beiden Stirnseiten mit einer durch spanlose Formgebung erzeugten, trichterähnlich ausgebildeten Verjüngung versehen ist, deren trichterauslaufseitiges Ende einen auf den Außendurchmesser von anzuschließenden Rohrleitungen weitestgehend abgestimmten Öffnungsquerschnitt aufweist.

Durch die spanlose Verformung der Stirnseite ist kostengünstig in einem einzigen Fertigungsvorgang ein Anschlußstutzen für eine anzuschließende Rohrleitung erzeugt, welche am auslaufseitigen Ende ihrer trichterähnlichen Gestalt eine die Befestigung der anzuschließenden Rohrleitung deutlich erleichternde Führung aufweist. Zudem sind durch die spanlose Formgebung Zerspanungs-Rückstände vermieden, welche für den Fall, daß die Ventilkörper nicht einer eingehenden Reinigung unterzogen werden, zu Ventilfunktionsstörungen führen können. Außerdem ist die spanlose Formgebung in hohem Maße zur Herstellung hoher Stückzahlen geeignet, wie sie beispielsweise im Konsumgüterbereich durchwegs auftritt.

Nach einer bevorzugten Ausführungsform des Gegenstandes der Erfindung ist vorgesehen, daß die trichterähnlich ausgebildete Verjüngung am Ventilkörper an separaten Rohrstutzen angeformt ist, welcher an einer der Stirnseiten des Ventilkörpers festgesetzt ist.

Durch eine derartige Ausbildung der Ventilkörper ist es möglich, diese in einem relativ späten Fertigungsstadium des Magnetventils produktspezifisch, entsprechend der anzuschließenden Rohrleitungen anzupassen.

Fertigungstechnisch besonders günstig herzustellen sind die separaten Rohrstutzen, wenn nach einer nächsten bevorzugten Ausführungsform des Gegenstandes der Erfindung vorgesehen ist, daß die mit den trichterähnlichen Verjüngungen versehenen separaten Rohrstutzen als Preßformteile aus Kupfer oder einer Kupferbasislegierung gebildet sind.

Entsprechend einer weiteren bevorzugten Ausführungsform des Gegenstandes der Erfindung ist vorgesehen, daß die trichterähnliche Verjüngung durch Herunterhämmern eines stirnseitigen Abschnitts der Rohrwandung eines als Ventilkörper dienenden dünnwandigen Rohres ähnlich einer Trocknerpatrone zum. Einsatz in Kältegeräten erzeugt ist.

Hierdurch wird auf einfache Weise ein aus einem einzigen Werkstoff gebildetes einstückiges Ventilgehäuse erzeugt, welches eine wesentlich vereinfachte Handhabung im Prüfungsprozeß für das Magnetventil ermöglicht. Außerdem erübrigt sich durch die spanlose Anformung der trichterähnlichen Verjüngung eine oftmals aufwendige, die Zerspanungsreste einer spanabhebenden Fertigung beseitigende Reinigung.

Gemäß einer weiteren bevorzugten Ausführungsform des Gegenstandes der Erfindung ist vorgesehen, daß der trichterähnlichen Verjüngung am Ventilkörper in Flußrichtung des strömenden Mediums ein Ventilsitz vorgeschaltet ist, welcher mit der trichterähnlich ausgebildeten Verjüngung einstückig verbunden ist.

Eine solche Lösung weist neben dem Vorzug, daß die Herstellung des Ventilgehäuses durch die Einsparung eines Montage- bzw. Fertigungsschrittes vereinfacht ist, vor allem noch den Vorteil auf, daß mit der Anbringung der trichterähnlichen Verjüngung an das Ventilgehäuse zugleich der Ventilsitz positionsgenau im Hinblick auf ein Zusammenwirken mit einem Ventilstellglied in einem einzigen Arbeitsgang bewirkt ist.

Besonders variabel ausbildbar hinsichtlich der Werkstoffwahl und besonders kostengünstig, aber dennoch mit hoher Fertigungsgenauigkeit herstellbar, ist ein Ventilsitz, wenn nach einer nächsten vorteilhaften Ausgestaltung des Gegenstandes der Erfindung vorgesehen ist, daß der Ventilsitz in der Bodenwandung eines im wesentlichen spanlos geformten, napfartigen Hohlkörpers ausgebildet ist, welcher an der inneren Rohrmantelfläche des dünnwandigen Rohres gegen eine in Richtung der Rohrachse angeordnete Tiefenbegrenzung festgesetzt ist.

Entsprechend einer nächsten bevorzugten Ausführungsform des Gegenstandes der Erfindung ist vorgesehen, daß am Ventilkörper ein radial vorstehender Anschlußbereich für eine Rohrleitung vorgesehen ist, der als ein in die Rohrwandung des dünnwandigen, plastisch verformbaren Rohres eingebrachter, von dessen Rohrraum weggerichteter, als Durchzug ausgeführter Anschlußstutzen ausgebildet ist.

Durch eine derartige Lösung wird ohne Anwendung kostenträchtiger Verbindungstechniken eine strömungsmediumdichte Verbindung zwischen dem Anschlußstutzen und dem Ventilkörper erzeugt. Zudem erübrigen sich die bei der Anwendung übliche Verbindungstechniken oftmals notwendigen Nacharbeiten und Dichteprüfungen.

Besonders zweckmäßig ist der Ventilkörper eines als 3/2-Wegeventil ausgebildeten elektrisch ansteuerbaren Magnetventils mit stirnseitig in seinem länglich ausgebildeten Ventilkörper angeordneten Einlaß- bzw. Auslaßöffnung und mit einem in zwei Arbeitesstellungen bringbaren Ventilstellglied ausgebildet, wenn nach einer nächsten vorteilhaften Ausgestaltung des Gegenstandes der Erfindung vorgesehen ist, daß der Ventilkörper des 3/2-Wegeventils nach einem der Ansprüche 1 bis 7 ausgebildet ist.

Nach einer weiteren bevorzugten Ausführungsform des Gegenstandes der Erfindung ist vorgesehen, daß das Ventilstellglied im Bereich seiner Stirnseiten je einen radial umlaufend angeordneten Vorsprung aufweist, welche zusammen zur Führung des Ventilstellgliedes an der inneren Rohrmantelfläche des Ventilkörpers dienen und welche beide zumindest an einer Stelle ihres Umfangs eine Durchlaßöffnung für das zu steuernde Strömungsmedium aufweisen.

Hierdurch ist sowohl eine eindeutig definierte klemmfreie Führung für das Ventilstellglied innerhalb des Ventilkörpers als auch auf einfache und kostengünstige Weise Strömungswege für das zu steuernde Strömungsmedium erzeugt.

Fertigungstechnisch mit besonders geringen Montagekosten herzustellen ist ein Ventilstellglied, wenn nach einer nächsten bevorzugten Ausführungsform des Gegenstandes der Erfindung vorgesehen ist, daß die die Durchlaßöffnung aufweisenden Vorsprünge an einem länglich ausgebildeten Grundkörper mitangeformt sind, welcher zusammen mit stirnseitig an ihm angeordneten Dichtflächen das Ventilstellglied bildet.

Außerdem ergibt sich für das Ventilstellglied aufgrund der zu dessen Herstellung notwendigen geringen Teilezahl eine herstellungsbedingt mit wenigen Toleranzen beaufschlagter Maßaufbau, so daß das Ventilstellglied allein schon aufbautechnisch mit geringfügigen Nennmaßabweichungen herstellbar ist.

Gemäß einer alternativen Ausgestaltung des Gegenstandes der Erfindung kann vorgesehen sein, daß die die Durchlaßöffnung aufweisenden Vorsprünge an mit einer Dichtfläche ausgestatteten Dichtelementen vorgesehen sind, welche an den Stirnseiten eines länglich ausgebildeten Grundkörpers angeordnet sind und welche zusammen mit dem Grundkörper das Ventilstellglied bilden.

Eine solche Lösung ermöglich den Einsatz verschiedenster Materialien zur Ausbildung der als Führungselemente für das Ventilstellglied an der inneren Rohrmantelfläche des Ventilkörpers dienenden Vorsprünge, so daß die zur Ausbildung einer Führung optimale Materialpaarung zwischen dem Ventilkörper und den Vorsprüngen einsetzbar ist.

Fertigungstechnisch besonders einfach erzeugbar sind die Durchlaßöffnungen in den Vorsprüngen, wenn nach einer weiteren bevorzugten Ausführungsform des Gegenstandes der Erfindung vorgesehen ist, daß die Durchlaßöffnung durch eine Abweichung der Außenkontur der Vorsprünge von der Kontur des durchströmten Rohrquerschnitts des Ventilkörpers erzeugt ist.

Gemäß einer letzten bevorzugten Ausführungsform des Gegenstandes der Erfindung ist vorgesehen, daß die die Durchlaßöffnung erzeugende Abweichung der Konturen zwischen den Vorsprüngen und der inneren Rohrmantelfläche des Ventilkörpers durch voneinander abweichende Querschnittsformen gebildet ist.

Dies ermöglicht sowohl für Herstellung des Ventilkörpers als auch für die der Vorsprünge den Einsatz von preiswerten Halbzeugen, welche zu ihrer endgültigen Fertigstellung nur noch eines geringen Fertigungsaufwandes bedürfen, so daß die Fertigungskosten für ein derartig ausgebildetes Magnetventil dadurch deutlich reduziert sind.

Die Erfindung ist in der nachfolgenden Beschreibung anhand von zwei in der beigefügten Zeichnung vereinfacht dargestellten Ausführungsbeispielen erläutert. Es zeigen:
- Fig. 1: in einem ersten Ausführungsbeispiel, in räumlicher Darstellung, ein 3/2-Wege-Magnetventil mit an den Stirnseiten seines kreiszylindrischen Ventilgehäuses festgesetzten, verjüngt ausgebildeten, separaten Rohrstutzen und mit einem im Rohrraum des Ventilgehäuses beweglich geführten Ventilstellgliedes, an dessen Stirnseiten zur Führung dienende, im Querschnitt quadratisch ausgebildete Vorsprünge angeordnet sind, im Halbschnitt,
- Fig. 2: vergrößert das Ventilgehäuse gemäß Fig. 1 in Schnittdarstellung entlang der Schnittlinie II-II,
- Fig. 3: in einem zweiten Ausführungsbeispiel raumbildlich kreiszylindrisch ausgebildete Ventilgehäuse eines 3/2-Wege-Magnetventils mit an seinen Stirnseiten mit angeformten, trichterartigen Verjüngungen und mit den Verjüngungen zum Gehäuseinnenraum hin nachgeschaltet, an napfartigen Hohlkörpern angeordneten Ventilsitzen, im Halbschnitt und
- Fig. 4: vergrößert das Ventilgehäuse gemäß Fig. 3 in Schnittdarstellung entlang der Schnittlinie III-III.

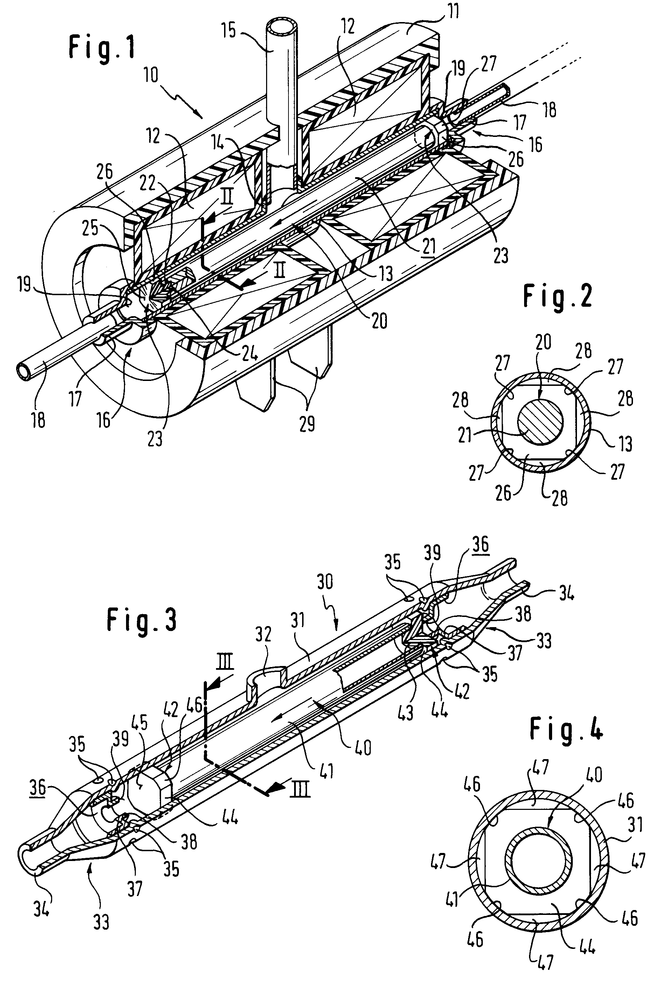

Fig. 1 ist in einem ersten Ausführungsbeispiel ein zur Steuerung des Kältemittelflusses in einer Mehrtemperaturen-Haushalts-Kältegerät geeignetes, elektrisch ansteuerbares Magnetventil gezeigt, welches als bistabiles 3/2-Wege-Magnetventil 10 ausgebildet ist. Dieses weist ein im wesentlichen als gerader Kreishohlzylinder ausgebildetes Gehäuse 11 aus thermoplastischem Kunststoff auf, welches zwei Ringspulen 12 berührungssicher umgibt. Die Ringspulen 12 sind mit ihrer inneren Ringmantelfläche auf einem als Ventilgehäuse dienenden Ventilkörper 13 im Abstand zueinander angeordnet. Dieser ist aus einem dünnwandigen, im Querschnitt kreisförmigen und plastisch verformbaren Rohr gebildet, welches aus einem nicht-ferromagnetischen Material, wie beispielsweise Kupfer besteht. Der als Rohr ausgebildete Ventilkörper 13 ist etwa in der Mitte seiner Länge mit einem von seiner äußeren Rohrwandung weggerichteten, durch spanlose Verformung der Rohrwandung erzeugten Durchzug ausgestattet, welcher als den Zulauf zum Magnetventil 10 bildender Anschlußstutzen 14 dient, an welchen eine Rohrleitung 15 über eine nicht näher bezeichnete Öffnung im Kunststoffgehäuse 11 festgesetzt ist, welche mit einem nicht gezeigten Verflüssiger strömungstechnisch verbunden ist. Der Ventilkörper 13 ist ferner an seinen beiden Stirnseiten mit trichterartigen Verjüngungen 16 ausgestattet, welche im vorliegenden Ausführungsbeispiel als separate, am äußeren Rohrmantel der stirnseitigen Enden des Ventilkörpers 13 kraftschlüssig befestigter Rohrstutzen ausgebildet sind. Zur Befestigung der als Preßformteile ausgebildeten, aus Kupfer oder Messing gefertigten trichterartigen Rohrstutzen dient deren mit größerem Durchlaßquerschnitt ausgestatteter Abschnitt. Der mit geringerem Durchlaßquerschnitt ausgestattete, das trichterauslaufseitige Ende bildende Abschnitt des Rohrstutzens ist als Anschlußstutzen 17 zur Aufnahme einer Rohrleitung 18 ausgebildet, welche ihrerseits als zulaufseitig dem Verdampfer vorgeschaltetes Drosselrohr ausgeführt ist. Dem zum Einbringen des Drosselrohres dienenden Anschlußstutzen 17 ist ein Ventilsitz 19 vorgeschaltet, welche am Übergang des größeren Rohrquerschnitts zum geringeren Rohrquerschnitt des Rohrstutzens vorgesehen ist.

Die beiden an den stirnseitigen Enden des Ventilkörpers 13 festgesetzten Verjüngungen 16 begrenzen den Verstellweg eines im Rohrinnenraum des Ventilkörpers 13 beweglich geführten Ventilstellgliedes 20, welches einen ferromagnetischen Grundkörper 21 aufweist. Dieser ist im vorliegenden Ausführungsbeispiel aus einem halbzeugartigen Rundmaterial gebildet, welches lediglich an seinen beiden Stirnseiten mit je einer Haltesacklochbohrung 22 versehen ist. Diese dient zur kraftschlüssigen Aufnahme eines an einem Ventilkegel 23 angeordneten Haltezapfen 24, mit dessen Hilfe jeder der beiden aus einem thermoplastischen Material gefertigten Ventilkegel 23 an den stirnseitigen Enden des Grundkörpers 21 festgesetzt sind. Die Ventilkegel 23 sind auf ihrer den Haltezapfen 24 gegenüberliegenden, den Verjüngungen 16 zugewandten Seite mit einer Dichtfläche 25 ausgestattet, welche mit den Ventilsitzen 19 an den Verjüngungen 16 strömungsmediumdicht bei entsprechender Stellung des Ventilstellgliedes 20 zusammenzuwirken vermögen. An die Dichtflächen 25 der Ventilkegel 23 schließt sich ein mit quadratischer Querschnittsfläche ausgestatteter quaderförmiger Abschnitt 26 an, dessen Außenkontur gegenüber der Mantelfläche des Grundkörpers 21 vorspringt und dessen diagonales Eckenmaß auf den Innendurchmesser des Ventilkörpers 13 durch Abflachen der Längskanten des Abschnitts 26 abgestimmt ist. Durch das Abflachen sind Führungsflächen 27 am Abschnitt 26 erzeugt, welche zur Führung des Ventilstellgliedes 20 an der inneren Rohrmantelfläche des Ventilkörpers 13 in Richtung der Rohrachse dienen. Zwischen den Führungsflächen 27 entlang der Mantelflächen des Abschnittes 26 sind durch dessen von Kontur der inneren Rohrmantelfläche des Ventilkörpers 13 abweichender Außenkontur Strömungswege 28 für das zu steuernde Strömungsmedium - bei Kältegeräten meist ein Gemisch aus gasförmigen und flüssigen Kältemittelanteilen - freigespart. Über diese Strömungswege 28 wird das Strömungsmedium von dem mittleren Anschlußstutzen 14 je nach Stellung des Ventilstellgliedes 20 einem der stirnseitigen Anschlußstutzens 17 am Ventilkörper 13 zugeführt.

Die Verstellung des Ventilstellgliedes 20 wird durch die Ringspulen 12 bewirkt, welche mittels gegenüber dem Kunststoffgehäuse 11 vorstehenden Steckanschlüssen 29 alternativ, je nach der gewünschten Arbeitsstellung des Ventilstellgliedes 20 bestromt werden. Durch die Bestromung der Ringspulen 12 üben diese auf das als Anker dienende Ventilstellglied 20 magnetische Kräfte aus, wodurch in Abhängigkeit der bestromten Ringspule 12 das Ventilstellglied 20 zum entsprechenden Ventilsitz 19 bewegt wird, so daß entweder der eine oder der andere stirnseitige Anschlußstutzen 17 mit dem mittleren Anschlußstutzen 14 strömungstechnisch verbunden ist.

In Fig. 2 ist eine zu der Konstruktion in Fig. 1 alternative Konstruktion für den Aufbau eines 3/2-Wege-Elektromagnetventils 30 gezeigt, wobei bei dieser Ausführungsform der Einfachheit halber die Elektromagnete und das zu deren berührungssicheren Abschirmen dienende Kunststoffgehäuse weggelassen wurde. Das Magnetventil 30 weist einen Ventilkörper 31 auf, welcher aus einem dünnwandigen, plastisch verformbaren, nicht ferromagnetischen Rohr (z.B. Kupfer), gebildet ist, in dessen Rohrwandung ein durch spanlose Formgebung erzeugter, von der äußeren Rohrmantelfläche weggerichteter, in etwa mittig zu den stirnseitigen Enden des Ventilkörpers 31 angeordneter Anschlußstutzen 32 eingeformt ist. Die stirnseitigen Enden des Ventilkörpers 31 sind durch Herunterhämmern ähnlich einer bei Kältegeräten zum Einsatz kommenden Trocknerpatrone spanlos zu trichterartigen Verjüngungen 33 geformt, deren vom Anschlußstutzen 32 weggerichtete trichterauslaufseitigen Endabschnitte als stirnseitige Anschlußstutzen 34 zur Aufnahme in einer nicht dargestellten, als Drosselrohr ausgebildeten Rohrleitung dienen. Im Nahbereich der trichterartigen Verjüngungen 33 ist der Ventilkörper 31 mit umlaufend von seiner äußeren Mantelfläche her in seine Rohrwandung spanlos eingeformten Prägungen 35 versehen, welche bezüglich der inneren Rohrmantelfläche nasenartig vorstehen. Die nasenartigen Prägungen 35 im Bereich der trichterartigen Verjüngungen 33 dienen als Tiefenanschläge für in den Öffnungsquerschnitt des Rohres von beiden Stirnseiten vor der Anformung der trichterartigen Verjüngungen 33 eingebrachten napfartigen Hohlkörpern 36, deren Bodenwandung 37 mit seiner vom Napfraum abgewandten Außenseite an den nasenartigen Vorsprüngen anschlägt. Hierdurch ist die Einpreßtiefe der napfartigen Hohlkörper 36 in den Rohrraum des Ventilkörpers 31 in Richtung seiner Rohrachse begrenzt. Die beiden Hohlkörper 36 weisen in ihrer Bodenwandung 37 einen spanlos darin eingebrachten Durchzug 38 auf, deren freie Enden in Richtung des mittleren Anschlußstutzens 32 gerichtet und als Ventilsitze 39 ausgebildet sind. Die in den Öffnungsquerschnitt des Ventilkörpers 31 an dessen innerer Rohrmantelfläche kraftschlüssig festgesetzten Hohlkörper 36 begrenzen den Verschiebeweg eines vor ihrem Einpressen in den Rohrraum eingefügten Ventilstellgliedes 40, welches im vorliegenden Ausführungsbeispiel einen als Halbzeug in Form eines ferromagnetischen Rohres mit kreisförmigem Querschnitt ausgebildeten Grundkörper 41 aufweist. Dieser ist an seinen beiden Stirnseiten mit je einem Ventilkegel 42 versehen, welcher im Spritzgießverfahren aus thermoplastischem Material gefertigt ist. Zur Befestigung der Ventilkegel 42 am Grundkörper 41 sind erstere mit einen Haltezapfen 43 ausgestattet, welche in den freien Öffnungsquerschnitt des rohrartigen Grundkörpers 41 kraftschlüssig eingesetzt sind. An die Haltezapfen 43 schließt sich ein mit quadartischem Querschnitt ausgestatteter quaderförmiger Abschnitt 44 an, welcher auf seiner vom Grundkörper 41 abgewandten, den trichterartigen Verjüngungen 33 zugewandten Stirnseite mit einer Dichtfläche 45 ausgestattet ist, welche in der entsprechenden Stellung des Ventilstellgliedes 40 mit dem jeweiligen Ventilsitz 39 am Hohlkörper 36 strömungsmediumsdicht zusammenwirkt. Die quaderförmigen Abschnitte 44 springen mit ihrer Außenkontur gegenüber der äußeren Mantelfläche des Grundkörpers 41 vor und weisen eine quadratische Querschnittsfläche auf, deren diagonales Eckenmaß auf den Innendurchmesser des Ventilkörpers abgestimmt ist. Die Abstimmung wird dabei durch ein an die Kontur der inneren Rohrmantelfläche angepaßtes Abflachen der einander diagonal gegenüberliegenden Längskanten des quaderförmigen Abschnitts 44 erzielt. Durch die Abflachungen sind Führungsflächen 46 gebildet, mit Hilfe derer das Ventilstellglied 40 im Rohrraumm des Ventilkörpers 41 in Richtung von dessen Rohrachse verschieblich geführt ist. Zwischen den Führungsflächen 46, entlang der Mantelflächen des quaderförmigen Abschnitts 44 sind durch dessen von der Kontur der inneren Rohrmantelfläche des Ventilkörpers 31 abweichender Außenkontur Strömungswege 47 erzeugt, über welche das beispielsweise über den mittleren Anschlußstutzen 32 zuströmende Strömungsmedium (z.B. flüssiges Kältemittel) entlang des Grundkörpers 41, je nach Stellung des Ventilstellgliedes 40 über den Ventilsitz 39, der an den Anschlußstutzen 17 angeschlossenen Drosselleitung zugeführt.

Es versteht sich, daß die Erfindung auch auf 2/2-Wege-Magnetventile anwendbar ist, wobei bei dieser Art von Ventilen sowohl der Ventilkörper als auch das Ventilstellglied nur an einer seiner Stirnseiten entsprechend den Merkmalen nach den Ansprüchen 1 bis 7 ausgebildet sind.

## Patentansprüche

1. Elektrisch ansteuerbares Magnetventil zum Steuern eines Strömungsmediums mit einem länglich ausgebildeten Ventilkörper zur Aufnahme eines darin weitestgehend geführt bewegbaren Ventilstellgliedes, welches einen Strömungsweg zwischen einer Einlaß- und einer Auslaßöffnung an Ventilkörper freigibt, **dadurch gekennzeichnet,** daß der Ventilkörper (13, 31) wenigstens an einer seiner beiden Stirnseiten mit einer durch spanlose Formgebung erzeugten trichterähnlich ausgebildeten Verjüngung (16, 33) versehen ist, deren trichterauslaufseitiges Ende einen auf den Außendurchmesser von anzuschließenden Rohrleitungen (18) weitestgehend abgestimmten Öffnungsquerschnitt aufweist.

2. Elektrisch ansteuerbares Magnetventil nach Anspruch 1, **dadurch gekennzeichnet**, daß die trichterähnliche Verjüngung (16) am Ventilkörper (13) an einem separaten Rohrstutzen angeformt ist, welcher an einer der Stirnseiten des Ventilkörpers (13) festgesetzt ist.

3. Elektrisch ansteuerbares Magnetventil nach Anspruch 2, **dadurch gekennzeichnet**, daß der am Ventilkörper (13) festgesetzte separate Rohrstutzen als Preßformteil aus Kupfer oder einer Kupferbasislegierung gebildet ist.

4. Elektrisch ansteuerbares Magnetventil nach Anspruch 1, **dadurch gekennzeichnet**, daß die trichterähnliche Verjüngung (33) durch Herunterhämmern eines stirnseitigen Abschnitts der Rohrwandung eines als Ventilkörper (31) dienenden, dünnwandigen Rohres ähnlich einer zum Einsatz in Kältegeräten geeigenten Trocknerpatrone erzeugt ist.

5. Elektrisch ansteuerbares Magnetventil nach einem der Ansprüche 1 bis 3, **dadurch gekennzeichnet**, daß der trichterähnlichen Verjüngung (16) am Ventilkörper (13) in Flußrichtung des strömenden Mediums ein Ventilsitz (19) vorgeschaltet ist, welcher mit der trichterähnlich ausgebildeten Verjüngung (16) einstückig verbunden ist.

6. Elektrisch ansteuerbares Magnetventil nach einem der Ansprüche 1 bis 4, **dadurch gekennzeichnet**, daß der trichterähnlichen Verjüngung (33) am Ventilkörper (31) in Flußrichtung des strömenden Mediums ein Ventilsitz (39) vorgeschaltet ist, welcher in der Bodenwandung (37) eines im wesentlichen spanlos geformten napfartigen Hohlkörpers (36) ausgebildet ist, welcher an der inneren Rohrmantelfläche des dünnwandigen Rohres in Richtung der Rohrachse angeordnete Tiefenbegrenzung (35) festgesetzt ist.

7. Elektrisch ansteuerbares Magnetventil nach einem der Ansprüche 1 bis 6, **dadurch gekennzeichnet**, daß am Ventilkörper (13, 31) ein radial vorstehender Anschlußbereich (17, 32) für eine Rohrleitung (18) vorgesehen ist, der als ein in die Rohrwandung des dünnwandigen, plastisch verformbaren Rohres eingebrachter, von dessen Rohrraum weggerichteter, als Durchzug ausgeführter Anschlußstutzen (17, 32) ausgebildet ist.

8. Elektrisch ansteuerbares Magnetventil, ausgebildet als 3/2-Wege-Ventil (10, 30) stirnseitig in seinem länglich ausgebildeten Ventilkörper (13, 31) angeordneten Einlaß- bzw. Auslaßöffnung mit einem in zwei Arbeitsstellungen bringbaren Ventilstellglied (20, 40) **dadurch gekennzeichnet**, daß der Ventilkörper (13, 31) nach einem der Ansprüche 1 bis 7 ausgebildet ist.

9. Elektrisch ansteuerbares Magnetventil nach Anspruch 8, **dadurch gekennzeichnet**, daß das Ventilstellglied (20, 40) im Bereich seiner Stirnseiten wenigstens je einen radial umlaufend angeordneten Vorsprung (26, 44) aufweist, welche zusammen zur Führung des Ventilstellgliedes (20, 40) an der inneren Rohrmantelfläche des Ventilkörpers (13, 31) dient und welche beide zumindest an einer Stelle ihres Umfangs eine Durchlaßöffnung (28, 47) für das zu steuernde Strömungsmedium aufweisen.

10. Elektrisch ansteuerbares Magnetventil nach Anspruch 9, **dadurch gekennzeichnet**, daß die die Durchlaßöffnung (28, 47) aufweisenden Vorsprünge (26, 44) an einem länglich ausgebildeten Grundkörper (21, 41) mitangeformt sind, welcher zusammen mit stirnseitig an ihm angeordneten Dichtflächen (25, 45) das Ventilstellglied (20, 40) bildet.

11. Elektrisch ansteuerbares Magnetventil nach Anspruch 9, **dadurch gekennzeichnet**, daß die die Durchlaßöffnung (28, 47) aufweisenden Vorsprünge (26, 44) an mit einer Dichtfläche (25, 45) ausgestatteten Dichtelement (23, 42) vorgesehen sind, welche an den Stirnseiten eines länglich ausgebildeten Grundkörpers (21, 41) angeordnet sind und welche zusammen mit dem Grundkörper (21, 41) das Ventilstellglied (20, 40) bilden.

12. Elektrisch ansteuerbares Magnetvenetil nach einem der Ansprüche 9 bis 11, **dadurch gekennzeichnet**, daß die Durchlaßöffnung (28, 47) durch eine Abweichung der Außenkontur der Vorsprünge (26, 44) von der Kontur des durchströmten Rohrquerschnitts des Ventilkörpers (13, 31) erzeugt ist.

13. Elektrisch ansteuerbares Magnetventil nach einem der Ansprüche 9 bis 12, **dadurch gekennzeichnet**, daß die die Durchlaßöffnung (28, 47) erzeugende Abweichung der Konturen zwischen den Vorsprüngen (26, 44) und der inneren Rohrmantelfläche des Ventilkörpers (13, 31) durch voneinander abweichende Querschnittsformen gebildet ist.
